# DEMANDE DE BREVET EUROPEEN

(11) **EP 2 248 717 A1**
(43) Date de publication de la demande: **10.11.2010**
(21) Numéro de dépôt: 10305445.8
(22) Date de dépôt: 28.04.2010
(51) Int. Cl.: B62K 21/16

(54) **Potence de cycle à longueur réglable**

(30) Priorité: 30.04.2009 FR 0952877; 23.10.2009 FR 0957456
(71) Demandeur: Look Cycle International, 58000 Nevers (FR)
(72) Inventeur: Servet, Sébastien, 58000, NEVERS (FR)
(74) Mandataire: Laget, Jean-Loup

(57) **Abrégé**

La potence comprend un corps de potence (2) pourvue de premiers moyens de fixation (3) de la potence (1) à un tube pivot et de deuxièmes moyens de fixation (25) d'un guidon à la potence. Les derniers comportent une chape en U (27) portant des premiers moyens de liaison (32) aptes à être reliés à des deuxièmes moyens de liaison (33) prévus à l'extrémité avant du corps de potence (2) pour fixer la chape en U (27) en regard d'un évidement (30) prévu à l'extrémité avant du corps de potence pour recevoir le guidon. La longueur de la potence peut être modifiée à l'aide d'au moins une entretoise (35) en forme de croissant disposée dans la forme en U pour l'obtention d'une longueur réduite de la potence ou dans l'évidement (30) pour l'obtention d'une longueur plus importante.

## Description

La présente invention concerne une potence de cycle à longueur réglable. La potence porte à l'une des ses extrémités le guidon du cycle et est à son extrémité opposée fixée à la partie supérieure du tube pivot monté rotatif dans la douille de direction du cadre de cycle.

L'avantage de la longueur réglable de la potence réside dans le fait qu'elle peut être adaptée pour être commode à des personnes prenant une position différente sur le cycle.

Afin d'obtenir un réglage de la longueur de la potence pour éviter, dans une certaine mesure, de fabriquer une gamme de potences de différentes longueurs, le US5842385 propose en outre de loger le guidon dans un insert à trou excentrique. Cependant, le réglage est relativement compliqué à effectuer puisqu'en faisant tourner l'insert, on modifie aussi l'angle d'inclinaison de la potence.

Cela vaut également pour la potence à longueur réglable décrite dans la publication EP1759976 qui utilise un insert constitué par un corps cylindrique dans lequel un trou traversant excentrique est prévu pour recevoir le guidon du cycle. Le corps cylindrique est en deux parties reliées l'une à l'autre par des moyens à nervure et rainure pour enserrer le guidon. Cet insert est disposé dans un trou traversant cylindrique de la potence qui vers l'avant est fermé par une chape en forme de U. L'inconvénient de cette mise en oeuvre est que la hauteur de la potence à cet endroit est nécessairement relativement importante pour permettre un déplacement significatif du guidon dans les directions horizontale et verticale, ce qui correspond au double de l'excentricité du trou de réception du guidon. La potence obtenue est par conséquent relativement encombrante dans sa partie avant.

Le document US5404769 décrit une potence à longueur réglable qui fonctionne suivant le même principe que celle du EP1759976 et l'encombrement du dispositif ressort encore plus clairement de ce document.

Un des buts de l'invention est ainsi de proposer une potence à longueur réglable qui à son extrémité avant présente la même hauteur que pour le reste de la potence, ce qui apporte une esthétique améliorée à la potence et permet d'en réduire le poids.

Afin de pouvoir régler l'inclinaison de la potence, les moyens de fixation de la potence au tube pivot comportent des moyens d'articulation comme cela est connu par exemples des publications CN200992282, US5327798 ou US5842385.

Par ailleurs, le choix de la hauteur des potences conventionnelles s'effectue en coupant le tube pivot à la longueur désirée et on place ensuite des inserts annulaires entre la potence et le tube de direction. Cette hauteur est ainsi réglable en jouant sur le nombre d'inserts.

En résumé, toutes les potences connues de ce genre sont relativement compliquées par leur construction et comportent un grand nombre de pièces à assembler, ce qui entraîne un poids et un coût élevés et souvent aussi une perte de rigidité de l'ensemble.

Le but de l'invention est de proposer une potence ce cycle comportant des moyens simples de réglage de la longueur de la potence.

Un autre but de l'invention est de proposer une potence de cycle à réglage de l'inclinaison de la potence simplifié, qui comporte très peu de pièces et qui apporte une rigidité améliorée à l'ensemble.

L'objet de l'invention est une potence de cycle à longueur réglable, comprenant un corps de potence dont l'une des extrémités est pourvue de premiers moyens de fixation de la potence à l'extrémité haute d'un tube pivot et dont l'extrémité opposée est pourvue de deuxièmes moyens de fixation d'un guidon à la potence, lesdits deuxièmes moyens de fixation comportant au moins une chape en forme de U présentant une forme adaptée à la forme du guidon et portant des premiers moyens de liaison aptes à être reliés à des deuxièmes moyens de liaison prévus à l'extrémité avant du corps de potence afin de fixer ladite chape en forme de U en regard d'un évidement prévu à l'extrémité avant du corps de potence et présentant une forme adaptée à la forme du guidon pour la réception de celui-ci de manière à enserrer ce dernier à l'aide de ladite chape en forme de U, caractérisée par le fait que la longueur de la potence peut être modifiée à l'aide d'au moins une entretoise présentant, vue de côté, une forme de croissant présentant des surfaces d'appui opposées reproduisant sensiblement la forme du guidon afin de permettre à ladite entretoise d'être disposée soit dans la forme en U de la chape pour l'obtention d'une longueur réduite de la potence, soit dans ledit évidement de réception à l'extrémité avant du corps de potence pour l'obtention d'une longueur plus importante.

Selon d'autres caractéristiques de l'invention :
- ladite entretoise en forme de croissant est en une seule pièce et s'étend sur toute la largeur du corps de potence;
- une entretoise dite en forme de croissant est disposée de chaque côté latéral du corps de potence et les deux entretoises sont reliées l'une à l'autre par des organes de liaison mâles et femelles s'étendant transversalement pour être emboîtés les uns dans les autres;
- lesdits organes mâles et femelles sont retenus les uns dans les autres par encliquetage;
- lesdits premiers moyens de liaison sont disposés aux deux extrémités de ladite chape en U pour coopérer avec des deuxièmes moyens de liaison disposés aux parties supérieure et inférieure du corps de potence, de part et d'autre dudit évidement de réception du guidon;
- ladite chape en U est à l'une de ses extrémités articulée sur le corps de potence pour être rabattue sur ledit évidement de réception du guidon;
- lesdits premiers moyens de fixation comprennent des moyens d'articulation permettant de régler l'inclinaison de la potence, et des moyens de serrage permettant de bloquer la potence en une position angulaire souhaitée, lesdits moyens de serrage comportant un premier et un deuxième organes de serrage de forme globalement hémicylindrique s'étendant transversalement dans un logement présentant une ouverture dirigée vers le bas afin d'y permettre l'introduction du tube pivot, lesdits premier et deuxième organes de serrage étant à leurs extrémités haute et basse respectives pourvus d'un évidement de réception adapté à la périphérie du tube pivot, ledit logement présentant une paroi au moins partiellement cylindrique coopérant avec ledit premier organe de serrage afin de définir ensemble lesdits moyens d'articulation;
- ledit deuxième organe de serrage est sollicité vers ledit premier organe de serrage par un organe formant coin déplaçable transversalement dans ledit logement;
- ledit organe formant coin présente une surface d'appui cylindrique épousant la forme extérieure dudit deuxième organe de serrage;
- un organe formant coin est disposé des deux côtés du corps de potence et que les deux organes formant coin sont reliés l'un à l'autre par une vis de serrage;
- ledit logement est ouvert latéralement des deux côtés du corps de potence;
- lesdits évidements de réception desdits premier et deuxième organes de serrage sont prolongés vers le haut respectivement vers le bas par un rebord saillant respectif définissant une surface d'appui élargie pour le tube pivot; et
- lesdits rebords font saillie dans une gorge du logement dans ladite au moins une partie cylindrique de celui-ci de manière à constituer des moyens de blocage transversal desdits premier et deuxième organes de serrage lorsque le tube pivot est introduit dans le logement et serré entre lesdits organes de serrage.

D'autres caractéristiques et avantages de l'invention ressortiront de la description qui va suivre d'un mode de réalisation non limitatif de l'invention, en référence aux figures annexées dans lesquelles :
- la figure 1 est une vue latérale partielle d'un cycle pourvu d'une potence selon l'invention;
- la figure 2 est une vue en perspective éclatée de la potence selon l'invention;
- la figure 3 est une coupe longitudinale de la potence selon la ligne III-III de la figure 7, assemblée et fixée sur un tube pivot et portant un guidon;
- la figure 4 est une coupe transversale de la potence selon la ligne IV-IV de la figure 3;
- les figures 5 et 6 sont des vues latérales schématiques montrant la potence selon l'invention dans deux positions extrêmes sur le tube pivot;
- la figure 7 est une vue en perspective illustrant la potence à longueur réduite;
- la figure 8 est une vue en perspective illustrant la potence à longueur augmentée; et
- la figure 9 est une vue en perspective éclatée de la potence selon l'invention similaire à la figure 2 et qui montre une variante de l'entretoise permettant de régler la longueur de la potence.

Dans les figures, les éléments identiques ou équivalents porteront les mêmes signes de référence.

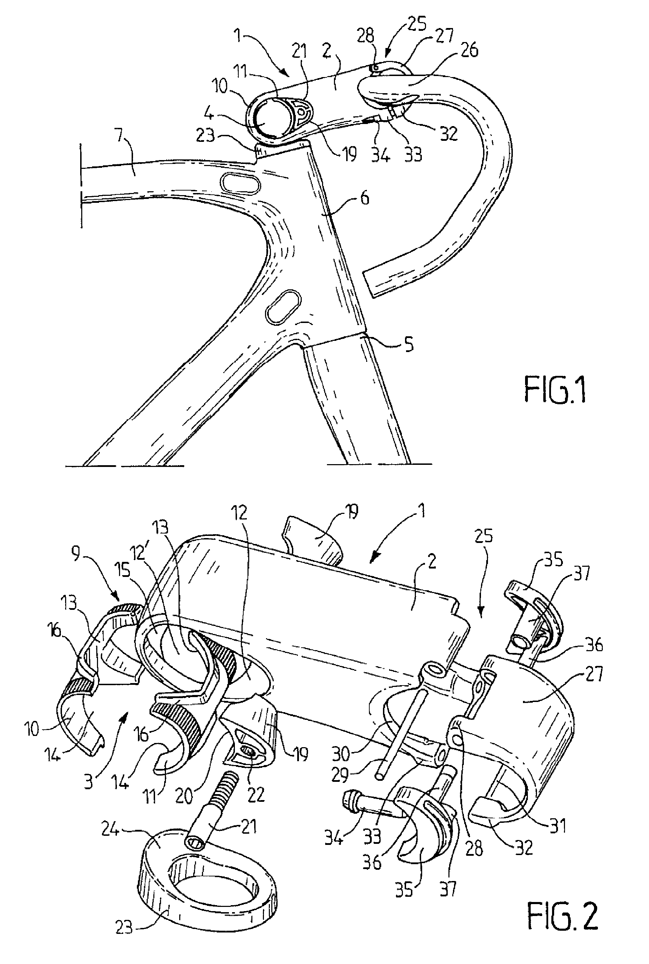

Les éléments constitutifs de la potence 1 selon l'invention sont montrés à la figure 2.

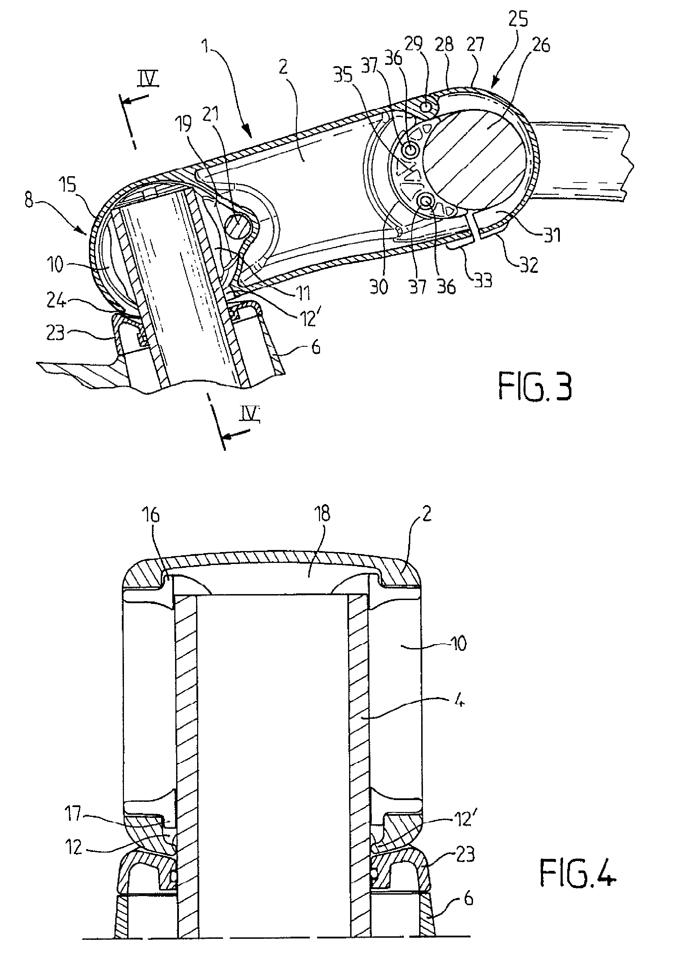

On y distingue le corps de potence 2 qui est un corps creux, de préférence en carbone compressé, présentant la forme d'un boîtier aux extrémités arrondies (voir figures 1 et 3).

L'extrémité arrière du corps de potence 2 est pourvue de premiers moyens de fixation 3 de la potence 1 à l'extrémité haute d'un tube pivot de fourche 4 qui à son tour est fixé à la tête de fourche 5 et monté pivotant dans le tube de direction 6 faisant partie du cadre 7 du cycle.

Les moyens de fixation 3 comprennent en outre des moyens d'articulation 8 permettant de régler l'inclinaison de la potence 1, ainsi que des moyens de serrage 9 permettant de bloquer la potence 1 dans une position souhaitée.

Selon une caractéristique importante de l'invention, les moyens de serrage 9 comportent un premier (10) et un deuxième (11) organes de serrage de forme globalement hémicylindrique s'étendant transversalement dans un logement 12 prévu à l'extrémité arrière de la potence 1.

Le logement 12 présente une ouverture 12' dirigée vers le bas afin d'y permettre l'introduction du tube pivot 4. Les premier et deuxième organes de serrage 10, 11 sont à leur extrémités haute et basse respectives pourvus d'un évidement de réception 13 respectivement 14 adaptés à la périphérie du tube pivot 4. Le logement 12 présente une paroi 15 au moins partiellement cylindrique apte à coopérer avec le premier organe de serrage 10 de manière à définir ensemble les moyens d'articulation 8.

Par ailleurs, les évidements de réception 13, 14 prévus dans les premier et deuxième organes de serrage 10, 11 sont avantageusement prolongés vers le haut respectivement vers le bas par un rebord saillant respectif 16, 17 (voir figure 4) pour définir une surface d'appui élargie pour le tube pivot 4.

Avantageusement, ces rebords saillants 16, 17 font saillie dans une gorge 18 du logement 12 (voir figure 4) de manière à constituer des moyens de blocage transversal des premier et deuxième organes de serrage 10, 11 lorsque le tube pivot 4 est introduit dans le logement 12 de manière à appuyer contre la paroi des évidements hauts et bas 13, 14 des premier et deuxième organes de serrage 10, 11.

Pour le serrage du tube pivot 4 par les premier et deuxième organes de serrage 10, 11, le deuxième organe de serrage 11 est sollicité vers le premier organe de serrage par un organe formant coin 19 déplaçable transversalement dans le logement 12.

Cet organe formant coin 19 présente une surface cylindrique 20 épousant la forme extérieure du deuxième organe de serrage 11. De préférence, et pour un meilleur équilibre, un tel organe formant coin 19 est disposé des deux côtés du corps de potence 2, ces deux organes formant coin étant reliés l'un à l'autre par une vis de serrage 21 qui est introduit dans un trou traversant lisse 22 pour coopérer avec un taraudage prévu dans l'autre organe formant coin, ce taraudage étant par exemple sous forme d'un écrou (non représenté) noyé dans la masse de celui-ci.

Pour le montage des premier et deuxième organes de serrage 10, 11, ainsi que des deux organes formant coin 19 à l'intérieur du logement 12, celui-ci est ouvert latéralement des deux côtés du corps de potence 2.

Pour fixer le tube pivot 4 à la potence 1, on desserre d'abord la vis de serrage 21pour déplacer les organes formant coin 19 vers l'extérieur en les éloignant l'un de l'autre de manière à créer un certain jeu entre les premier et deuxième organes de serrage 10, 11 afin de faciliter l'introduction du tube pivot 4 dans le logement 12.

Ensuite, il suffit d'introduire le tube pivot 4 dans le logement 12 jusqu'à ce qu'il vient en butée contre la paroi du logement, de régler l'inclinaison de la potence 1 grâce aux moyens d'articulation 8, et de serrer les premier et deuxième organes de serrage 10, 11 autour du tube pivot 4 en agissant sur la vis de serrage 21 qui déplace les organes formant coin 19 transversalement vers l'intérieur de manière à solliciter le deuxième organe de serrage 11 en direction du premier organe de serrage 10.

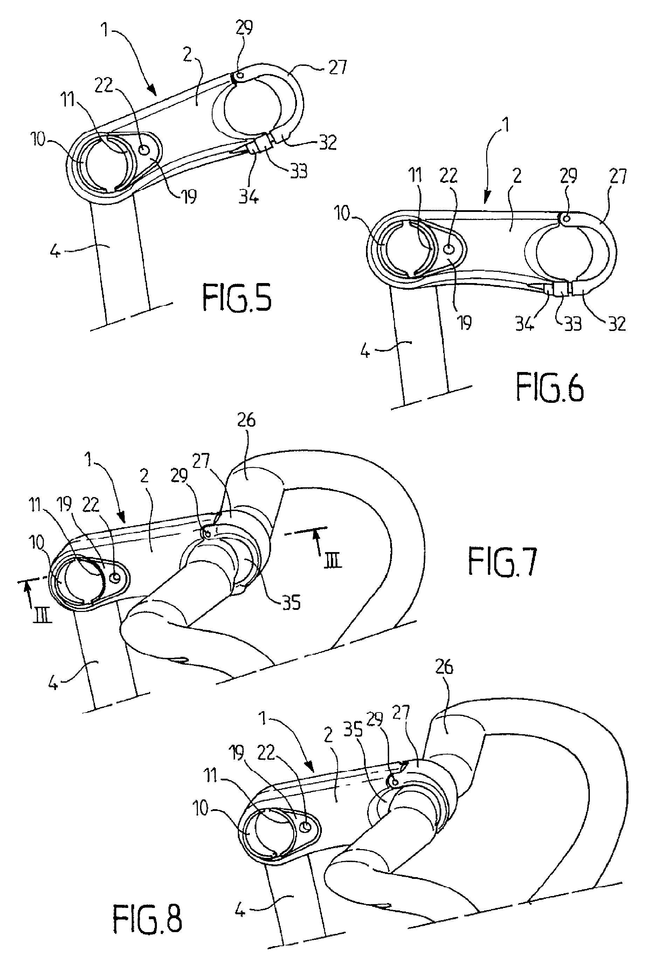

Bien entendu, l'ouverture 12' du logement 12 présente une forme allongée dans le sens axial du corps de potence 2 de manière à permettre un certain débattement angulaire de la potence 1 comme cela est illustré aux figures 5 et 6, la figure 5 montrant la position extrême haute et la figure 6 montrant la position extrême basse de la potence, avec un réglage en continu entre ces deux positions.

La longueur du tube pivot 4 est déterminée lors de la fabrication, mais la hauteur de la potence 1 au-dessus du tube de direction 6 peut être réglée à l'aide d'un insert annulaire 23 disposé entre ces deux éléments. Le cadre peut avantageusement être fourni avec un jeu d'inserts à épaisseurs différentes qui sur une partie de leur face tournée vers le haut présentent une forme incurvée adaptée à la forme extérieure de la partie du corps de potence 2 définissant l'articulation. De cette manière, la surface d'appui de la potence 1 sur l'insert 23 devient plus importante, ce qui contribue à la stabilité de l'ensemble.

L'extrémité avant du corps de potence 2 est pourvue de deuxièmes moyens de fixation 25 d'un guidon 26 à la potence 1. Ces deuxièmes moyens de fixation 25 comportent une chape en forme de U 27 qui à l'une de ses extrémités 28 est articulée sur le corps de potence 2 autour d'un axe 29 pour être rabattue de manière à être disposée en regard d'un évidement 30 présentant une forme adaptée à la forme du guidon 26 pour la réception de celui-ci, cet évidement étant prévu à l'extrémité avant du corps de potence 2. La chape en U présente également une forme adaptée à la forme du guidon et porte à son extrémité opposée 31 des premiers moyens de liaison 32 aptes à être reliés à des deuxièmes moyens de liaison 33 prévus sur le corps de potence. Les premiers et deuxièmes moyens de liaison 32, 33 sont reliés les uns aux autres par une paire de vis de fixation 34, une vis de chaque côté, afin d'enserrer le guidon 26.

Selon une variante non représentée, la chape 26 est en deux parties et définissent avec deux évidements à l'avant de la potence pratiquement deux anneaux de serrage.

Selon l'invention, la longueur de la potence peut être modifiée à l'aide d'une entretoise qui, vue de côté, présente une forme de croissant 35 adaptée pour être disposée dans la forme en U de la chape 27 pour l'obtention d'une longueur réduite de la potence 1 ou dans l'évidement de réception 30 à l'extrémité du corps de potence 2 pour l'obtention d'une longueur plus importante. L'entretoise en forme de croissant 35 présente par conséquent des surfaces d'appui opposées reproduisant sensiblement la forme du guidon 26.

Le trou de réception du guidon est ainsi un trou allongé défini par l'évidement 30 et par la chape en U 27. Les surfaces d'extrémité en secteur de cylindre de ce trou de réception sont reliées l'une à l'autre par deux surfaces planes et parallèles, ce qui permet de réduire la hauteur de l'ensemble de la partie avant de la potence.

Grâce à ce dispositif, il est ainsi possible de rapprocher ou d'éloigner le guidon 26 du cycliste.

De préférence, une entretoise 35 de ce genre est disposée sur chaque côté latéral du corps de potence 2. Les deux entretoises sont reliées l'une à l'autre par des organes de liaison mâles 36 et des organes de liaison femelles 37 s'étendant transversalement vers l'intérieur pour coopérer les uns avec les autres en étant emboîtés les uns dans les autres. Ces entretoises 35 sont avantageusement maintenues ensemble par encliquetage des organes mâles et femelles 36, 37.

Du fait que le corps de potence 2 est après son montage sur le tube pivot 4 et après avoir reçu le guidon 26 fermé des deux côtés, c'est-à-dire d'un côté par le deuxième organe de serrage 11 et de l'autre côté par le guidon 26 logé dans l'évidement de réception 30, avec ou sans entretoise 35, il forme un boîtier étanche qui se trouve pratiquement intégré au cadre 7, ce qui permet un gain de rigidité, mais aussi une meilleure esthétique et une continuité des formes.

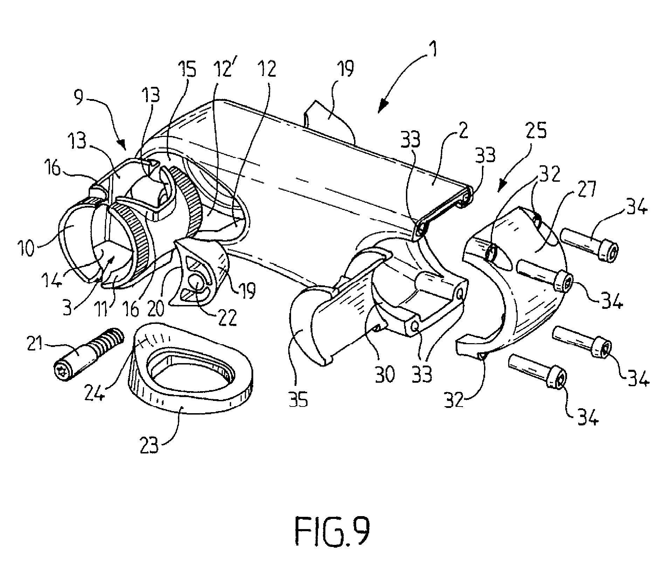

Une variante de la potence selon l'invention est illustrée à la figure 9. Elle diffère de la potence décrite en référence à la figure 2 par deux aspects.

Premièrement, l'entretoise 35 est en une seule pièce et s'étend sur toute la largeur du corps de potence 2. Cela constitue une simplification par rapport à l'utilisation de deux entretoises reliées l'une à l'autre comme cela vient d'être décrit.

Deuxièmement, au lieu d'utiliser une articulation pour relier la chape en forme de U 27 à la partie supérieure de l'extrémité avant de la potence 2, des premiers moyens de liaison 32 sont disposés aux deux extrémités de la chape en U pour coopérer avec des deuxièmes moyens de liaison 33 disposés aux parties supérieure et inférieure du corps de potence 2, de part et d'autre de l'évidement 30 de réception du guidon 26 pour disposer la chape en U 27 en regard de cet évidement de réception. Tous comme dans la variante décrite en référence à la figure 2, les premiers et deuxièmes moyens de liaison 32, 33 sont reliés les uns aux autres par une paire de vis de fixation 34, une vis de chaque côté.

Est ainsi obtenue, grâce à l'invention, une potence de cycle permettant le réglage de sa hauteur, sa longueur et son inclinaison par des moyens extrêmement simples et fiables.

Bien entendu, l'invention n'est pas limitée aux exemples illustrés et décrits, et l'homme du métier sera en mesure de prévoir des combinaisons de ces modes de réalisation différents ainsi que d'autres variantes sans pour autant sortir du cadre de l'invention.

## Revendications

1. Potence de cycle à longueur réglable, comprenant un corps de potence (2) dont l'une des extrémités est pourvue de premiers moyens de fixation (3) de la potence (1) à l'extrémité haute d'un tube pivot (4) et dont l'extrémité opposée est pourvue de deuxièmes moyens de fixation (25) d'un guidon (26) à la potence, lesdits deuxièmes moyens de fixation (25) comportant au moins une chape en forme de U (27) présentant une forme adaptée à la forme du guidon (26) et portant des premiers moyens de liaison (32) aptes à être reliés à des deuxièmes moyens de liaison (33) prévus à l'extrémité avant du corps de potence (2) afin de fixer ladite chape en forme de U (27) en regard d'un évidement (30) prévu à l'extrémité avant du corps de potence et présentant une forme adaptée à la forme du guidon (26) pour la réception de celui-ci de manière à enserrer ce dernier à l'aide de ladite chape (27) en forme de U, **caractérisée par le fait que** la longueur de la potence (1) peut être modifiée à l'aide d'au moins une entretoise (35) présentant, vue de côté, une forme de croissant présentant des surfaces d'appui opposées reproduisant sensiblement la forme du guidon (26) afin de permettre à ladite entretoise (35) d'être disposée soit dans la forme en U de la chape (27) pour l'obtention d'une longueur réduite de la potence (1), soit dans ledit évidement de réception (30) à l'extrémité avant (28) du corps de potence (2) pour l'obtention d'une longueur plus importante.

2. Potence de cycle selon la revendication 1, **caractérisée par le fait que** ladite entretoise (35) en forme de croissant est en une seule pièce et s'étend sur toute la largeur du corps de potence (2).

3. Potence de cycle selon la revendication 1, **caractérisée par le fait qu'**une entretoise dite en forme de croissant (35) est disposée de chaque côté latéral du corps de potence (2) et en ce que les deux entretoises (35) sont reliées l'une à l'autre par des organes de liaison mâles et femelles (36, 37) s'étendant transversalement pour être emboîtés les uns dans les autres.

4. Potence de cycle selon la revendication 3, **caractérisée par le fait que** lesdits organes mâles et femelles (36, 37) sont retenus les uns dans les autres par encliquetage.

5. Potence de cycle selon l'une quelconque des revendications précédentes, **caractérisée par le fait que** lesdits premiers moyens de liaison (32) sont disposés aux deux extrémités de ladite chape en U (27) pour coopérer avec des deuxièmes moyens de liaison disposés aux parties supérieure et inférieure du corps de potence (2), de part et d'autre dudit évidement (30) de réception du guidon (26).

6. Potence de cycle selon l'une quelconque des revendications 1 à 4, **caractérisée par le fait que** ladite chape en U (27) est à l'une (28) de ses extrémités (28, 31) articulée sur le corps de potence (2) pour être rabattue sur ledit évidement (30) de réception du guidon (26).

7. Potence de cycle selon l'une quelconque des revendications précédentes, dans laquelle lesdits premiers moyens de fixation (3) comprennent des moyens d'articulation (8) permettant de régler l'inclinaison de la potence (1), et des moyens de serrage (10, 11, 19, 21) permettant de bloquer la potence (1) en une position angulaire souhaitée, **caractérisée par le fait que** lesdits moyens de serrage comportent un premier et un deuxième organes de serrage (10, 11) de forme globalement hémicylindrique s'étendant transversalement dans un logement (12) présentant une ouverture (12') dirigée vers le bas afin d'y permettre l'introduction du tube pivot (4), lesdits premier et deuxième organes de serrage (10, 11) étant à leurs extrémités haute et basse respectives pourvus d'un évidement de réception (13, 14) adapté à la périphérie du tube pivot (4), ledit logement (12) présentant une paroi au moins partiellement cylindrique (15) coopérant avec ledit premier organe de serrage (10) afin de définir ensemble lesdits moyens d'articulation (8).

8. Potence de cycle selon la revendication 7, **caractérisée par le fait que** ledit deuxième organe de serrage (11) est sollicité vers ledit premier organe de serrage (10) par un organe formant coin (19) déplaçable transversalement dans ledit logement (12).

9. Potence de cycle selon la revendication 8, **caractérisée par le fait que** ledit organe formant coin (19) présente une surface d'appui cylindrique (20) épousant la forme extérieure dudit deuxième organe de serrage (11).

10. Potence de cycle selon la revendication 8 ou 9, **caractérisée par le fait qu'**un organe formant coin (19) est disposé des deux côtés du corps de potence et que les deux organes formant coin (19) sont reliés l'un à l'autre par une vis de serrage (21).

11. Potence de cycle selon l'une quelconque des revendications 7 à 10, **caractérisée par le fait que** ledit logement (12) est ouvert latéralement des deux côtés du corps de potence (2).

12. Potence de cycle selon l'une quelconque des revendications 7 à 11, **caractérisée par le fait que** lesdits évidements de réception (13, 14) desdits premier et deuxième organes de serrage (10, 11) sont prolongés vers le haut respectivement vers le bas par un rebord saillant respectif (16, 17) définissant une surface d'appui élargie pour le tube pivot (4).

13. Potence de cycle selon la revendication 12, **caractérisée par le fait que** lesdits rebords (16, 17) font saillie dans une gorge (18) du logement (12) dans ladite au moins une partie cylindrique (15) de celui-ci de manière à constituer des moyens de blocage transversal desdits premier et deuxième organes de serrage (10, 11) lorsque le tube pivot (4) est introduit dans le logement (12) et serré entre lesdits organes de serrage.
